# EUROPÄISCHE PATENTSCHRIFT

(11) **EP 3 505 026 B1**
(45) Veröffentlichungstag und Bekanntmachung des Hinweises auf die Patenterteilung: **04.11.2020**
(21) Anmeldenummer: 18215517.6
(22) Anmeldetag: 21.12.2018
(51) Int. Cl.: A47J 36/32, A47J 37/10, A47J 27/12, A47J 27/14, F24C 7/08

(54) **VERFAHREN ZUM ANZEIGEN EINES BEDIENMENÜS UND ANSTEUERN EINES GARGERÄTS**
METHOD FOR DISPLAYING A CONTROL MENU AND CONTROL OF A COOKING DEVICE
PROCÉDÉ D'AFFICHAGE D'UN MENU DE FONCTIONNEMENT ET DE COMMANDE D'UN APPAREIL DE CUISSON

(30) Priorität: 29.12.2017 IT 201700151066
(43) Veröffentlichungstag der Anmeldung: 03.07.2019
(73) Patentinhaber: RATIONAL International AG, 9435 Heerbrugg (CH)
(72) Erfinder: Spahlholz, Kevin, 68270 Wittenheim (FR); Endres, Simon, 68270 Wittenheim (FR); Hönig, Michael, 79106 Freiburg im Breisgau (DE); Wallstein, Simone, 68270 Wittenheim (FR)
(74) Vertreter: Prinz & Partner mbB

(56) Entgegenhaltungen:
- EP-A1- 2 189 724
- EP-A1- 2 211 116
- EP-A2- 2 767 761
- DE-U1-202006 009 284
- DE-U1-202015 105 748
- US-A1- 2003 047 553
- US-A1- 2012 003 364

## Beschreibung

Die Erfindung betrifft ein Verfahren zum Anzeigen wenigstens eines Bedienmenüs eines Gargeräts auf einem Touchscreen und zum Ansteuern des Gargeräts, wobei das Bedienmenü verschiedene Menüebenen aufweist.

In Großküchen kommen Gargeräte zum Einsatz, die eine Vielzahl von Bereichen in einem Garraum aufweisen, in denen von Bereich zu Bereich unterschiedliche Gargüter gegart werden können. Die Anmelderin vertreibt unter dem Handelsnamen VarioCooking Center® ein Gargerät in Form einer Kipppfanne, die eine Vielzahl von Garzonen zum Aufheizen über Kontakthitze in einem Tiegel aufweist.

Die aktuellen Gargeräte sind hochflexibel in ihrer Anwendung, insbesondere über die Unterteilung der Garräume in einzelne Bereiche. Um die Möglichkeiten auszuschöpfen muss der Bediener durchaus eine gewisse Affinität zu elektronischen Bedienkonzepten besitzen.

Die EP 2 767 761 A2 zeigt ein Verfahren zum Anzeigen eines Bedienmenüs eines Gargeräts auf einem Touchscreen. Dabei werden in einem ersten Übersichtsfeld alle zur Verfügung stehenden Heizflächen angezeigt, welche auch unmittelbar angewählt werden können. In einem zweiten Übersichtsfeld können dann Temperaturen dazu eingestellt werden.

Aus der EP 2 189 724 A1 ist ein weiteres Verfahren zum Anzeigen eines Bedienmenüs bekannt.

Aufgabe der Erfindung ist es, die Bedienung eines Gargeräts mit einem oder mehreren Garräumen, die durch ein bzw. mehrere ebene Heizflächen gebildet ist bzw. sind, auf das bzw. die Gargut aufgelegt oder aufgeschüttet wird, noch intuitiver, vor allem noch schneller zu machen, sodass auch die Einlernphasen für den Bediener deutlich verkürzt werden können.

Dies wird durch ein Verfahren zum Anzeigen wenigstens eines Bedienmenüs eines Gargeräts auf einem Touchscreen und zum Ansteuern des Gargeräts gelöst, wobei das Bedienmenü verschiedene Menüebenen aufweist, wobei in der ersten Menüebene gleichzeitig angezeigt werden:
a) ein erstes Übersichtsfeld zumindest eines eine ebene Heizfläche bildenden Garraums, der symbolisch angezeigt wird, mit zur separaten Aktivierung in der ersten Menüebene direkt anwählbaren Bereichen des Garraums und, zusätzlich, zumindest eines der folgenden Übersichtsfelder
b) ein zweites Übersichtsfeld mit mehreren verschiedenen vorgegebenen Garraumunterteilungen, die unterschiedliche, separat aktivierbare symbolisch wiedergegebene Bereiche des Garraums aufweisen, wobei die vorgegebenen Garraumunterteilungen zur Aktivierung in der ersten Menüebene am Touchscreen direkt anwählbar sind,
c) ein drittes Übersichtsfeld mit mehreren verschiedenen symbolisch dargestellten Garanwendungen, die zur Aktivierung in der ersten Ebene direkt am Touchscreen anwählbar sind, und
d) ein viertes Übersichtsfeld mit verschiedenen vorgegebenen Garraumunterteilungen mit bereits zugeordneten Garanwendungen, die in der ersten Menüebene direkt anwählbar sind.

Das erfindungsgemäße Verfahren sieht vor, dass neben dem ersten Übersichtsfeld zusätzlich zumindest ein weiteres Übersichtsfeld (zweites bis viertes Übersichtsfeld) in der ersten Menüebene angezeigt wird. Der Begriff "erstes Übersichtsfeld zumindest eines eine ebene Heizfläche bildenden Garraums" bedeutet, dass das erste Übersichtsfeld die ebene Heizfläche im Garraum symbolisiert wiedergibt, welche zur Erwärmung des Garraums dient. Üblicherweise ist die Heizfläche der Boden des Garraums. Das erste Übersichtsfeld gibt Bereiche des Garraums wieder, die dann gleichzeitig auf dem Touchscreen eine Bedienung der einzelnen Bereiche des Garraums erlauben, d. h. das Auslösen eines Befehls an die Steuerung (z.B. Auswählen des Garraumbereichs zur weiteren Bearbeitung von Daten vor Auslösen des Heizbefehls) oder aus der Steuerung heraus (z.B. direktes Auslösen des Heizbefehls des entsprechenden Bereichs nach Betätigung des Bereichs auf dem Übersichtsfeld). Der Bediener muss folglich nicht in Untermenüebenen eindringen, die er im Zweifelsfall nicht auswendig kennt, sondern kann in der ersten Menüebene die für ihn wichtigsten Bedienbefehle eingeben. Das erste Übersichtsfeld gibt zumindest einen Garraum symbolisch wieder, der durch eine ebene Heizfläche, auf die Gargut aufgelegt oder geschüttet wird, definiert ist. In diesem Garraum können Bereiche funktionsmäßig abgetrennt werden und direkt angewählt werden, indem beispielsweise der Garraum auf dem Touchscreen eine Rasterung aufweist und die einzelnen Felder (Bereiche) der ebenen Heizfläche direkt angetippt werden können, um sie zu aktivieren oder auszuwählen. Das heißt, die Rasterung und die einzelnen Bereiche bilden auf dem Touchscreen virtuelle Tasten aus, durch deren Betätigung die zugeordneten, symbolisiert wiedergegebenen Bereiche des tatsächlichen Garraums in der Steuerung ausgewählt oder sofort aktiviert (z.B. geheizt) werden. Hier kann der Bediener sehr schnell beispielsweise größere oder kleinere Bereiche anwählen und gegebenenfalls zusammenschalten. Über Antippen oder über eine Wischbewegung kann dann optional die Auswahl auf andere Bereiche ausgeweitet werden. Alternativ hierzu kann er aber in der ersten Menüebene bereits vorgegebene Garraumunterteilungen mit einer Tastenberührung auswählen, beispielsweise den gesamten Garraum auswählen oder den Garraum in zwei Hälften oder drei gleich große Abschnitte oder in maximal kleine Bereiche unterteilen. Für diese verschiedenen Optionen der Garraumunterteilungen stehen üblicherweise im zweiten Übersichtsfeld virtuelle Tasten zur Verfügung, die auf dem Touchscreen wiedergegeben werden und die durch Berührung geschaltet werden.

Das dritte Übersichtsfeld enthält verschiedene Garanwendungen, also beispielsweise Schmoren, Fisch Braten, Kochen usw. Auch diese verschiedenen Garanwendungen haben eigene virtuelle Tasten, die im dritten Übersichtsfeld individuell nach den Bedürfnissen des Anwenders angeordnet sind, zum Beispiel nebeneinander oder untereinander, und damit schnell und übersichtlich erfasst und bedient werden können.

Das vierte Übersichtsfeld umfasst verschiedene vorgegebene Garraumunterteilungen mit bereits zugeordneten Garanwendungen. Diese verschiedenen Garraumunterteilungen mit zugeordneten Garanwendungen lassen sich dann, wenn das vierte Übersichtsfeld angezeigt wird, in der ersten Menüebene direkt anwählen. Dies ist beispielsweise folgendermaßen realisierbar. Eine virtuelle Taste zeigt eine maximale Unterteilung des Garraums in sechs Bereiche, und in diesen sechs Bereichen ist die Garanwendung "Steak Braten" jedem Bereich zugeordnet. Eine andere virtuelle Taste im vierten Übersichtsfeld sieht vor, dass vier Bereichen "Steak Braten" und zwei Bereichen die Garanwendung "langsames Schmoren" zugeordnet ist. Dies ist sinnvoll, wenn beispielsweise weniger oft geschmortes Fleisch bestellt wird als Steaks, sodass ein Heizen der übrigen Bereiche unnötig ist. Der Bediener kann mithilfe des vierten Übersichtsfeldes seine üblichen Bons sehr schnell abarbeiten, indem er mit einem Tastendruck die Garraumunterteilung samt bereits zugeordneter Garanwendung anwählt.

Optional kann in der ersten Menüebene in jedem Fall das dritte Übersichtsfeld angezeigt werden. Ohne die erste Menüebene zu verlassen kann der Bediener Bereiche des Garraums anwählen, entweder über das erste oder das zweite Übersichtsfeld und dem angewählten Bereich dann Garanwendungen zuordnen. Dies schafft eine maximal schnelle Bedienmöglichkeit. Beispielsweise kann der Bediener sofort mit einem "Tastendruck" auf dem Touchscreen einen Bereich des Garraums anwählen, um ein Steak zu braten, und mit dem zweiten Tastendruck die Garanwendung "Steak Braten" zuordnen. Natürlich kann dies auch umgekehrt erfolgen, d. h. indem zuerst die Garanwendung ausgewählt wird und anschließend der Bereich. Dies lässt sich beispielsweise über eine Drag-and-Drop-Funktion realisieren, indem zuerst die Garanwendung ausgewählt und dann in den gewünschten Bereich oder die gewünschten Bereiche gezogen wird. Es lassen sich aber auch sehr schnell über den gesamten Garraum verschiedene Bereiche mit verschiedenen Garanwendungen einstellen, beispielsweise am vorderen Rand des Garraums Fisch braten und am hinteren Rand des Garraums Fleisch schmoren, usw.

In der ersten Menüebene kann aber auch nur das zweite, das dritte oder nur das vierte Übersicht fällt angezeigt werden. Über zusätzliche virtuelle Tasten, die permanent vorhanden sind, kann dann mit einem Tastendruck ausgewählt werden, ob das zweite, ob das dritte oder ob das vierte Übersichtsfeld in der ersten Menüebene angezeigt wird, also das zusätzlich zum ersten Übersichtsfeld angezeigte Übersichtsfeld ist.

Um ein versehentliches Bedienen von Tasten zu verhindern, können nach Anwahl einer Option in dem zweiten, dritten und/oder vierten Übersichtsfeld die übrigen Optionen dieser Übersichtsfelder ausgeblendet werden. Diese Optionen werden auf dem Touchscreen mit virtuellen Tasten realisiert und sind anwählbar. Hat beispielsweise der Bediener aus dem zweiten Übersichtsfeld die virtuelle Taste gewählt, mit der Aktivierung des gesamten Garraums, so werden die übrigen Tasten nicht mehr angezeigt, damit der Bediener nicht versehentlich auf diese Tasten kommt und damit das Gargerät umschaltet.

Noch übersichtlicher wird das Bedienmenü, wenn in einer Steuerung die Verwendung des Bedienmenüs abgespeichert wird und bei einer nachfolgenden Bedienung aus der Gruppe des zweiten, dritten und vierten Übersichtsfelds zumindest das am seltensten verwendete Übersichtsfeld aus der ersten Menüebene ausgeblendet wird. Das bedeutet, die Anzeige ist in diesem Fall selbstlernend und entlastet den Bediener vor zu vielen Informationen, die er gar nicht nutzt. Die Anzeige in der ersten Menüebene wird somit vor Überfrachtung von Symbolen und Übersichtsfeldern geschützt. Alternativ hierzu kann sogar aufgrund der Steuerung nur das zuletzt verwendete Übersichtsfeld eingeblendet und die übrigen Übersichtsfelder ausgeblendet werden. Wenn der Bediener beispielsweise nie mit dem vierten Übersichtsfeld arbeitet, kann dieses für diesen Bediener nicht angezeigt werden.

Die Erfindung sieht auch vor, dass das Verfahren bedienerspezifisch ausgeführt wird. Das bedeutet, beim Anmelden des Bedieners muss dieser sich identifizieren. Da jeder Bediener verschiedene Vorlieben zur Bedienung hat, wird in der ersten Menüebene über seine gespeicherten Benutzerdaten die Anzeige auf den Bediener zugeschnitten, indem beispielsweise eines der Übersichtsfelder ausgeblendet wird. Nachdem, wie nachfolgend auch noch erläutert werden wird, der Bediener individuelle Tasten mit zugeordneten individuellen Garraumunterteilungen, Garanwendungen oder kombinierten Garraumunterteilungen mit bereits zugeordneten Garraumanwendungen programmieren kann, werden für diesen Bediener "seine" von ihm kreierten virtuellen Tasten nur bei ihm angezeigt.

Wenn in der ersten Menüebene eine sogenannte Rückholtaste, d. h. eine virtuelle Taste zum Rückholen für jedes ausgeblendete Übersichtsfeld vorhanden ist, kann bei Anwahl dieser Rückholtaste das zugeordnete Übersichtsfeld wieder in der ersten Menüebene erscheinen. Diese Rückholtaste kann von der Fläche her relativ klein sein, um die Anzeige nicht zu überfrachten.

Das Zuordnen von ausgewählten Bereichen des Garraums zu Anwendungen oder umgekehrt Garanwendungen zu ausgewählten Bereichen des Garraums kann beispielsweise dadurch erfolgen, dass im ersten Übersichtsfeld die Bereiche und im dritten Übersichtsfeld Garanwendungen angewählt werden, d. h. die entsprechenden Symboltasten, insbesondere durch Antippen oder eine Drag-and-Drop-Funktion. Die Reihenfolge der Zuordnung ist beliebig, d. h. es kann zuerst ein Bereich und anschließend eine Garanwendung oder umgekehrt angewählt werden.

Dieses Zuordnen erfolgt in der ersten Menüebene selbst, die nicht verlassen werden muss.

Nach Auswahl einer Garanwendung oder Zuordnung von Garbereichen und Garanwendungen wird im ersten Übersichtsfeld vorzugsweise angezeigt, auf welche Bereiche oder zusätzliche Bereiche die gewählte Garanwendung ausgeweitet werden kann.

Gemäß einem ersten Beispiel wird im vorderen Bereich des Garraums extrem heiß gebraten, während im hinteren Bereich des Garraums bei niedrigen Temperaturen geschmort wird. Muss der Bediener nun beispielsweise noch weitere Steaks braten, so kann dies möglicherweise nicht unmittelbar im angrenzenden Bereich zum Bereich "Schmoren" erfolgen. Die Steuerung ermittelt, welche Bereiche noch möglich wären und zeigt diese an, beispielsweise durch Aufleuchten dieser virtuellen Bereiche auf dem Touchscreen oder durch entsprechende Pfeile von dem Bereich mit der auszuweitenden Garanwendung auf die möglichen, bislang ungenutzten Bereiche. Diese weiteren Bereiche, auf die die gewählte Garanwendung ausgeweitet werden soll, kann der Bediener z. B. durch Antippen oder Wischen mit der gewählten Garanwendung verknüpfen, was ebenfalls eine extrem schnelle Bedienung erlaubt.

Gemäß einem zweiten Beispiel wird, ähnlich wie dies zuvor im Zusammenhang mit der Erweiterungsmöglichkeit von Garanwendungen auf andere Bereiche nach der Zuordnung von Garbereichen und Garanwendungen erläutert wurde, bereits nach Auswahl einer Garanwendung im ersten Übersichtsfeld zumindest ein durch eine zugeordnete Steuerung optimiert zugeordneter Bereich angezeigt wird. Dieser Bereich kann dann angewählt werden, um die ausgewählte oder neue Garanwendung auf diesen Bereich zulegen oder auf diesen Bereich auszuweiten. Die anderen Bereiche werden entweder nicht angezeigt, nicht umrahmt oder grau hinterlegt oder erscheinen nicht in der entsprechenden Farbintensität oder Helligkeit. Beispielsweise möchte die Bedienperson erneut ein Steak braten, wobei die Steuerung ermittelt, welcher Bereich noch eine hohe Resthitze von einer vorhergehenden Garanwendung besitzt. Angezeigt wird dann dieser entsprechende Bereich als Vorschlag, um die Garanwendung in diesem Bereich auszuführen und um Energie zu sparen.

Ferner lassen sich in Untermenüs, die aus der ersten Menüebene heraus aufgerufen werden, Garanwendungen individualisieren. Das bedeutet, der Bediener ist nicht nur auf die in der ersten Menüebene angegebenen Garanwendungen beschränkt, sondern kann vorzugsweise sogar jederzeit, d. h. auch während des laufenden Garens, entweder Garanwendungen für neue virtuelle Tasten programmieren oder laufende Garanwendungen ändern. In einem Untermenü lassen sich für das zweite, dritte und/oder vierte Übersichtsfeld zusätzliche, individuell parametrisierbare Anwahltasten erzeugen und dauerhaft abspeichern.

Eine alternative Funktion besteht darin, dass ein Untermenü aus der ersten Menüebene aufgerufen werden kann, in welchem die in der ersten Menüebene in dem zweiten bis vierten Übersichtsfeld anzuzeigenden vorgegebenen Garraumunterteilungen, vorgegebenen Garanwendungen bzw. vorgegebenen Garraumunterteilungen mit bereits zugeordneten Garanwendungen ausgewählt und/oder positioniert werden können. Mit anderen Worten: der Bediener kann beispielsweise im zweiten Übersichtsfeld alle darin unmittelbar anzuzeigenden vorgegebenen Garraumunterteilungen auswählen und auch ihre Reihenfolge, sodass er seine hauptsächlich benutzte Garraumunterteilung beispielsweise ganz nach links legen kann. Dasselbe gilt für die entsprechenden virtuellen Tasten des dritten und vierten Übersichtsfelds.

Diese zusätzlichen Anwahltasten werden optional selbstständig von der Steuerung nach dem Abspeichern in das zugeordnete zweite, dritte oder vierte Übersichtsfeld aufgenommen und in der ersten Menüebene unmittelbar angezeigt. Beispielsweise kann die Steuerung so ausgeführt sein, dass sie die entsprechende am wenigsten benutzte Anwahltaste im jeweiligen Übersichtsfeld dafür aus der ersten Menüebene herausnimmt. Diese herausgenommene Anwahltaste kann aber dann in einem Untermenü nach wie vor zur Verfügung stehen und wieder in die erste Menüebene vom Bediener hochgezogen werden.

Es gibt Gargeräte mit mehreren Garräumen, beispielsweise Gargeräte mit zwei Tiegeln oder Heißluft- und Dampf-Gargeräte mit übereinanderliegenden Garräumen, die optional auch zu einem großen Garraum verbunden sind, wobei hier jedoch einzelne Ebenen im Sinne der Erfindung jeweils einen eigenen Garraum definieren. Das erfindungsgemäße Verfahren sieht vor, dass in der ersten Menüebene und im ersten Übersichtsfeld entweder diese mehreren Garräume symbolisch und nebeneinander mit unmittelbar anwählbaren und dadurch aktivierbaren Bereichen der jeweiligen Garräume angezeigt werden oder dass zuerst die Garräume einzeln ausgewählt werden können, um dann allein angezeigt zu werden. Im letzteren Fall kann dies zu einer besseren Übersichtlichkeit führen.

Der Bediener soll auch die Möglichkeit erhalten, nähere Informationen zur angewählten Garanwendung zu erhalten, beispielsweise eine Anzeige der Istwerte zur Gartemperatur, zum Garfortschritt und/oder zur Restgarzeit. Hierzu ist ein Informations-Anzeigebereich in der ersten Menüebene vorhanden, oder er kann durch Anwahl in der ersten Menüebene eingeblendet werden. In diesem Informations-Anzeigebereich sind dann Informationen zu Parametern für jeden Bereich des Garraums enthalten.

Jeder Bereich im ersten Übersichtsfeld ist optional so anwählbar, dass Zugang zu wenigstens einer der folgenden Tasten erfolgt, die eingeblendet werden: Stopptaste, Timertaste, Löschtaste, Taste zum Öffnen einer Funktion zum Ändern der gewählten Bereiche und Änderungstaste zum Öffnen des Untermenüs. Diese Tasten können auch über Zwischenschaltung einer nach dem Anwählen im ersten Übersichtsfeld eingeblendeten Pop-over-Taste vorhanden sein. Das bedeutet, der Bediener hat eine relativ kleine virtuelle Taste, nämlich die Pop-over-Taste, die nach Berührung die anderen Tasten oder die vorgewählten anderen Tasten erscheinen lässt, sodass man z. B. über Zwischenschaltung der Pop-over-Taste sofort zur Timertaste kommt.

Gargeräte mit mehreren individuell wählbaren Bereichen haben üblicherweise Heizelemente, die diese Bereiche definieren. Bei Tiegeln sind dies z. B. quadratische Heizfelder. Diese Heizfelder sind wie Kacheln nebeneinander angeordnet und beheizen den gesamten Boden. Eine Option der Erfindung sieht vor, dass im ersten Übersichtsfeld Bereiche ausgewählt werden können, die außerhalb der Grenzen zwischen benachbarten Heizfeldern liegen, d. h. es können nicht nur Bereiche gewählt werden, die durch die nur ganze "Kachelform" definiert sind, sondern auch andere Bereiche, z. B. eineinhalb Heizfelder.

Zu betonen ist, dass die Zuordnung von Garanwendungen, Garraum Unterteilungen und Bereichen nicht nur für einen Garraum, sondern optional bei mehreren Garderäumen auch für diese mehreren Garräume in der ersten Menüebene stattfinden kann. Das bedeutet, der Bediener kann sein gesamtes Gargerät komplett und individuell belegen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Variante eines Gargeräts, das mit einem Touchscreen und einer Steuerung versehen ist, über die das erfindungsgemäße Verfahren durchgeführt wird,
- Figur 2 eine beispielhafte erste Menüebene, die auf dem Touchscreen gemäß einem ersten Zustand über das erfindungsgemäße Verfahren angezeigt wird,
- Figur 3 eine zweite und eine dritte, nebeneinander dargestellte Menüebene zum Programmieren oder Einstellen von Garanwendungen,
- Figur 4 eine zweite und eine dritte, nebeneinander dargestellte Menüebene zum Programmieren oder Einstellen von Garraumunterteilungen,
- Figur 5 eine zweite und eine dritte sowie eine vierte Menüebene, nebeneinander dargestellt, zum Programmieren und Einstellen von Garraumunterteilungen mit Vorbelegung von Garanwendungen,
- Figur 6 eine vergrößerte Darstellung eines Bereichs eines Garraums mit Pop-up-Taste, und
- Figur 7 eine Ansicht des Touchscreens nach Anwählen eines Garraumbereichs mit Garparameteransicht.

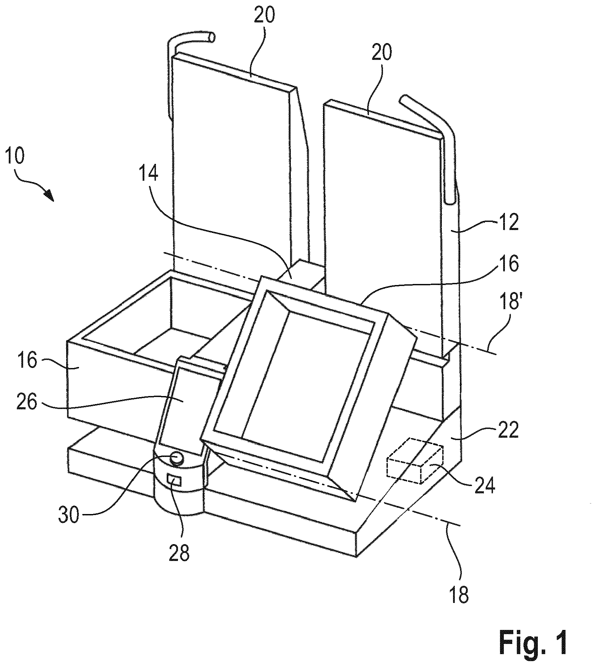

In Figur 1 ist ein für den professionellen Einsatz ausgebildetes Gargerät 10, hier beispielsweise in Form eines Tiegel-Gargeräts dargestellt. In der dargestellten Ausführungsform gemäß Figur 1 umfasst das Gargerät ein im Wesentlichen T-förmiges Gestell 12 mit einem Mittelsteg 14, der zwei separat betätigbare und nutzbare Tiegel 16 lagert. Die Tiegel 16 sind jeweils motorisch um eine Schwenkachse 18 kippbar.

Jedem Tiegel 16 ist ein eigener Deckel 20 zugeordnet, der wiederum um eine eigene Schwenkachse 18' verschwenkt werden kann. Ein Sockel 22 oder ein tischartiger Unterbau haltert dann das Gestell 12. Im Sockel 22 oder im Mittelsteg 14 kann eine Steuerung 24 (symbolisch dargestellt) untergebracht sein, die einerseits mit einem Touchscreen 26 und andererseits mit sämtlichen Motoren und Heizelementen im Tiegel 16 gekoppelt ist. Über den Touchscreen 26, eventuell auch über zusätzliche Tasten 28 oder Drehregler 30 wird das Gargerät 10 von außen steuerbar.

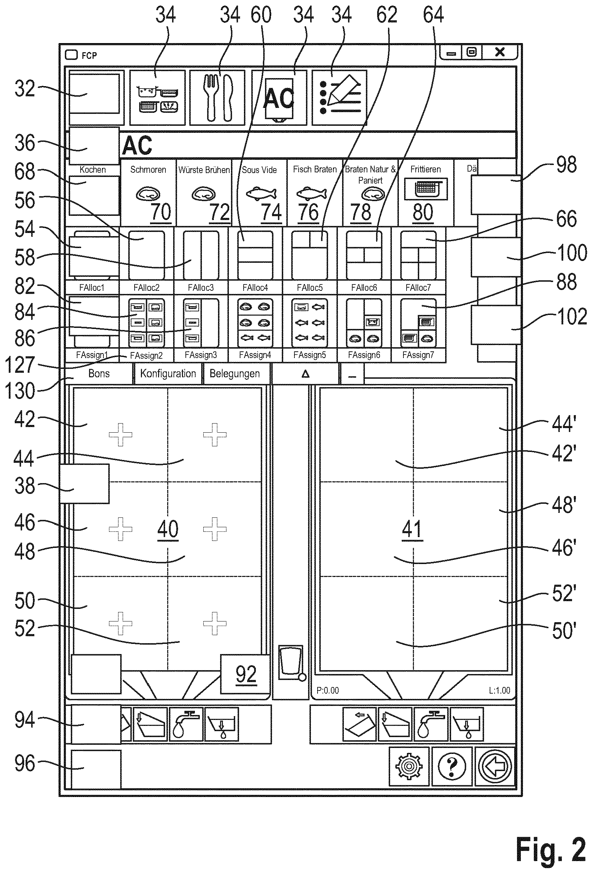

Die Steuerung 24 steuert auch die durch den Touchscreen 26 hervorgerufene Anzeige, die in Figur 2 beispielhaft anhand einer ersten Menüebene dargestellt ist.

Der Touchscreen 26 hat mehrere Abschnitte und Übersichtsfelder, die nachfolgend beschrieben werden. Eine oberste Zeile 32 umfasst mehrere mit Symbolen gekennzeichnete virtuelle Tasten 34, über die der Betriebsmodus mit einer Berührung bei Anwahl der entsprechenden Taste gewählt wird.

Der vorliegende Betriebsmodus ist der Modus "AC", wobei unterhalb der Zeile 32 der Touchscreen die entsprechenden Tasten und Anzeigen des Betriebsmodus AC in Figur 2 bereits zeigt. In der darunterliegenden Zeile 36 kann noch einmal in Buchstaben oder in einem Symbol der gerade gewählte Betriebsmodus aus der Zeile 32 wiedergegeben werden. Somit lässt sich aus der Zeile 36 der augenblickliche Betriebsmodus ersehen, und über die Zeile 32 lässt sich parallel hierzu sofort ein anderer Betriebsmodus wählen.

Bevor auf die unmittelbar darunterliegenden drei Zeilen eingegangen wird, wird zuvor ein sogenanntes erstes Übersichtsfeld 38 erläutert, in dem symbolisch die Garräume 40, 41 dargestellt werden, in Form des linken und des rechten Tiegels 16. Die Garräume 40, 41 sind durch die ebenen Heizflächen, also hier konkret die Böden der Tiegel definiert, auf den Gargut aufgelegt oder geschüttet werden kann.

Die Tiegel 16 umfassen beispielsweise am Boden sechs kachelartige, in zwei Spalten und drei Zeilen angeordnete, separat ansteuerbare Heizfelder, die in Figur 2 durch entsprechende Bereiche 42 bis 52 für den linken Tiegel und 42' bis 52' für den rechten Tiegel dargestellt sind. Diese Bereiche 42 bis 52 und 42' bis 52' sind zugleich separat anwählbare virtuelle Tasten, die bei Berührung ausgewählt werden, wie nachfolgend noch erläutert wird.

Wenn einer der beiden Garräume belegt oder, allgemeiner, ausgewählt oder bearbeitet werden soll, so wird einfach auf diesen Garraum im ersten Übersichtsfeld 38 gedrückt, sodass dieser ausgewählt und fokussiert wird. Der entsprechende Garraum wird dann automatisch größer gezoomt, damit einerseits die Übersicht für diesen Garraum besser wird und andererseits klar ist, dass dieser Garraum ausgewählt wurde. Der nicht ausgewählte Garraum wird dann im ersten Übersichtsfeld 38 kleiner angezeigt, wobei vorzugsweise aber weiterhin trotz der kleineren Anzeige die entsprechenden Informationen für seine Bereiche angezeigt werden. Damit mehr Platz für den vergrößert dargestellten Garraum zur Verfügung steht, können die nachfolgend erwähnten zweiten bis vierten Übersichtsfeld entweder zum Teil nicht angezeigt oder verkleinert werden. Wenn der andere Garraum in den Fokus gelegt werden soll, gibt es verschiedene Möglichkeiten. Zum einen kann der bis dahin kleiner angezeigte Garraum angetippt werden, und diese Tiegel wird größer, während der andere Garraum automatisch kleiner wird. Darüber hinaus kann auch der zuvor erwähnte Drehregler 30 betätigt werden, über den zwischen den Garäumen "geschaltet" werden kann, d. h. der eine oder andere Garraum in den Fokus gelegt werden kann. Über einen optionalen Pfeil, den sogenannten "Zurückpfeil", oder über eine Wischfunktion lässt sich optional auch wieder die Darstellung gemäß Figur 2 zurückholen, in welcher beide Garräume gleich groß dargestellt sind. Ferner ist denkbar, dass nach einer vorgegebenen Zeit, nachdem ein Garraum in den Fokus gelegt wurde und keine Bearbeitung dieses Garraums erfolgte, wieder zurück in die Anzeige gemäß Figur 2 gesprungen wird.

Ein zweites Übersichtsfeld 54 wird durch eine Zeile gebildet, in der nebeneinander oder untereinander mehrere verschiedene, vorgegebene Garraumunterteilungen symbolisch durch jeweils separate, unmittelbar anwählbare virtuelle Tasten, auch Anwahltasten genannt, angezeigt werden. Die linke Garraumunterteilung 56 und die entsprechende Taste sehen beispielsweise vor, dass sämtliche Bereiche 42 bis 52 angewählt werden und als Garraumunterteilung hier der gesamte Garraum ausgewählt wird. Die rechts angrenzende Garraumunterteilung 58 und die entsprechende Taste sehen vor, dass hier der Garraum in eine linke und eine rechte Hälfte unterteilt wird. Die wiederum rechts angrenzende Garraumunterteilung 60 mit der entsprechenden Taste sieht eine Garraumunterteilung in drei Zeilen vor, indem die Bereiche 42 und 44 gleichgeschaltet werden, darunter die Bereiche 46 und 48 gleichgeschaltet werden und darunter wiederum die Bereiche 50 und 52. Die links angrenzenden drei weiteren Garraumunterteilungen 62 bis 66 haben wieder andere, spezielle Garraumunterteilungen, bei denen einzelne Bereiche 42 bis 52 oder 42' bis 52' entweder einzeln geschaltet oder in Gruppen zusammengeschaltet sind. Wenn Bereiche optisch identisch hervorgehoben sind, beispielsweise mit der gleichen Farbe hinterlegt sind, mit dem selben Rahmen umgeben sind oder mit derselben Helligkeit angezeigt werden, bedeutet dies, dass diese Bereiche zusammengeschaltet und temperaturmäßig und vom Ablauf des Garvorgangs identisch angesteuert werden.

Eine dritte Zeile, die ein drittes Übersichtsfeld 68 darstellt, hat verschiedene virtuelle Tasten, die verschiedene, über Berührung der virtuellen Taste direkt anwählbare Garanwendungen 70 bis 80 aufführt.

Beispielsweise ist die Garanwendung 70 für Schmoren, die Garanwendung 72 für Würste Brühen, die Garanwendung 74 für Sous Vide, die Garanwendung 76 für Fisch Braten, die Garanwendung 78 für Braten Natur & Paniert und die Garanwendung 80 für Frittieren vorgesehen.

Eine separate Zeile, die ein viertes Übersichtsfeld 82 bildet, hat verschiedene nebeneinander angeordnete virtuelle Anwahltasten 84, von denen nur beispielhaft im Folgenden die vier Anwahltasten 84 bis 88 erläutert werden. Bei diesen Anwahltasten 84 bis 88 sind Garraumunterteilungen vorgenommen, wobei den entsprechenden Bereichen 42 bis 52 oder 42' bis 52' bereits Garanwendungen fest zugeordnet sind. Auch hier kann durch Berührung der entsprechenden Tasten 84 bis 88 unmittelbar in der ersten Menüebene direkt eine entsprechende Garraumunterteilung mit vorgegebener Garanwendung angewählt werden.

Die Anwahltaste 84 sieht beispielsweise vor, dass der zuvor oder anschließend ausgewählte Garraum in zwei Hälften unterteilt wird, sodass die Bereiche 42, 46 und 50 oder 42', 46' und 50' zusammengeschaltet sind, ebenso wie die rechte Hälfte, d. h. die Bereiche 44, 48, 52 bzw. 44', 48', 52'. Die Bereiche 42, 46, 50 oder 42', 46', 50' haben fest ein Schmoren zugeordnet, wogegen die Bereiche 44, 48, 52 oder 44', 48', 52' die Garanwendung Fisch Braten zugeordnet haben.

Bei der Anwahltaste für die Garraumunterteilung 58 ist jeweils die rechte Hälfte inaktiv, d. h. es sind die Bereiche 44, 48, 52 oder 44', 48', 52' nicht angewählt, wogegen in der linken Hälfte, d. h. in den Bereichen 42, 46, 50 oder 42', 46', 50' die Garanwendung Schmoren zugeordnet ist.

Hinter der Anwahltaste 88 steht beispielsweise für den Bereich 48 oder 48' die Garanwendung Frittieren, und für den Bereich 52 oder 52' die Garanwendung Braten Natur & Panieren sowie für den Bereich 50 oder 50' die Garanwendung Kochen.

Wenn das Gargerät beispielsweise das in Figur 1 gezeigte Gargerät mit Tiegeln 16 ist, kann zur Realisierung von verschiedenen Garanwendungen eine Trenneinrichtung mit einer oder mehreren Wänden in den Tiegel eingebracht werden, wie dies aus dem Stand der Technik bekannt ist. Diese Wände trennen dann beispielsweise den Bereich 48 oder 48' zum Frittieren von den angrenzenden Bereichen flüssigkeitsdicht ab, sodass aus dem Tiegel ein Abschnitt abgeteilt wird, in den Öl eingegossen werden kann. Gleiches gilt für Bereiche, die zum Kochen abgetrennt werden sollen. Alternativ hierzu kann auch eine sogenannte Bratabtrennung eingesetzt werden, die ein Weiterfließen von Öl in einen angrenzenden Teil verhindert.

Die Zuordnung einer Garanwendung zu einem Bereich in einem der zwei Garräume, d. h. Tiegel 16, erfolgt beispielsweise dadurch, dass zuerst auf einen Bereich eines Tiegels, d. h. auf den Bereich 42 oder 44 getippt wird, sodass dieser Bereich beispielsweise hell und der andere Bereich für den anderen Garraum dunkel oder gräulich wird. Anschließend wird auf die gewünschte Anwahltaste für die Garanwendungen 70 bis 80 getippt, um diese dementsprechend dem Garraum zuzuordnen. Natürlich kann die Zuordnung auch umgekehrt erfolgen, d. h. zuerst auf die Anwahltaste für Garanwendungen 70 bis 80 zu tippen und anschließend auf den Garraum. Eine weitere Zuordnung kann durch eine Drag-and-Drop-Funktion zwischen den Optionen im ersten und im dritten Übersichtsfeld 38 bzw. 68 erfolgen.

Die Taste 92 ist eine Speichertaste, über die nach entsprechender Programmierung von Bereichen eine Speicherung der augenblicklichen Konfiguration des oder der Garräume erfolgen kann. Diese Konfiguration kann auch dazu verwendet werden, als neue virtuelle Taste beispielsweise in das zweite, dritte oder vierte Übersichtsfeld 54, 68 oder 82 aufgenommen zu werden.

In der Zeile 94 sind mehrere virtuelle Aktionstasten nebeneinander angeordnet, über die der Wassereinlauf, die Bewegung des Garraums oder des Deckels angesteuert werden können.

In der Zeile 96 können über Symbole entsprechende Anwahltasten angewählt werden, z. B. eine Schnelle-Hilfe-Funktion.

Virtuelle Tasten 98 bis 102 sind den Übersichtsfeldern 68, 54 bzw. 82 zugeordnet. Bei ihrer Betätigung öffnet sich ein Untermenü, über welches für das entsprechende Übersichtsfeld weitere Optionen und damit Anwahltasten programmiert werden können oder bisherige Optionen und Anwahltasten mit anderen Parametern, z. B. mit anderen Gartemperaturen, versehen werden können.

Im Folgenden wird eine Option zum Ansteuern des Gargeräts über den Touchscreen erläutert. Der Bediener möchte beispielsweise mehrere Fische im linken Tiegel braten. Hierzu berührt er den virtuellen Garraums 40, sodass dieser in den aktiven Fokus gelegt wird, also ausgewählt ist. Die Anzeige des Garraums 40 wird größer und die des Garraums 41 kleiner. Nun kann er den Garraum 40 konfigurieren bzw. belegen. Anschließend kann der Bediener dasselbe mit dem Garraum 41 vornehmen.

Die Anzahl der Fische ist so groß, dass der Bediener hierfür die Bereiche 50 und 52 des virtuellen Garraums 40 aktivieren muss. Dazu berührt er die Bereiche 50, 52 im ersten Übersichtsfeld und aktiviert diese damit, sodass diese beispielsweise heller erscheinen als die übrigen Bereiche. Anschließend berührt er die Anwahltaste für die Garanwendung 76. Damit bereits die Zuordnung erfolgt. Alternativ hierzu kann zuerst durch Drücken die Garanwendung 76 "Fisch Braten" ausgewählt werden, und anschließend wird diese Garanwendung durch Antippen der Bereiche 50, 52 diesen Bereichen zugeordnet.

Alternativ hierzu kann zuerst ein oder mehrere Bereiche 42 bis 52' ausgewählt werden, und anschließend wird eine virtuelle Taste 34 berührt, durch die sich ein Pulldown Menü öffnet, womit alle Garanwendungen aufgereiht werden. Diese virtuelle Taste 34 kommt insbesondere dann zum Einsatz, wenn das dritte Übersichtsfeld 68 nicht eingeblendet ist.

Eine weitere Möglichkeit besteht darin, zuerst die Garanwendung 76 durch entsprechendes Berühren der Anwahltaste auszuwählen und dann durch Drag-and-Drop diese Garanwendung auf die Bereiche 50 und 52 zu ziehen.

Für diesen Auswahlprozess muss der Bediener in kein Untermenü eintauchen, es reicht die Bedienung in der ersten Menüebene.

Ein anderes Beispiel wird im Folgenden durch Verwendung des zweiten Übersichtsfelds 54 erläutert. Zuerst wird entweder Garraum 40 oder der Garraum 41 durch Berührung ausgewählt, sodass er in den Fokus gelangt. Der Bediener drückt anschließend die Anwahltaste im zweiten Übersichtsfeld 54 für die Garraumunterteilung 58, sodass der Garraum 40 in zwei Hälften unterteilt wird. Nun drückt er für die linke Hälfte die Garanwendung 70 für "Schmoren" und für die rechte Hälfte die Garanwendung 72 für "Würste Brühen". Die entsprechende Fixierung der Zuordnung kann ebenfalls durch Tippen, Doppeltippen oder Drag-and-Drop erfolgen, gegebenenfalls unter Zuhilfenahme des Drehreglers 30 oder einer Fixiertaste. Die Fixiertaste ist beispielsweise eine kleine virtuelle Taste in jedem Bereich 42 bis 52', die z.B. mit einem Hakensymbol versehen ist. Das Fixieren kann auch dadurch erfolgen, dass nach einer vorgegebenen Zeit keine weitere Eingabe mehr erfolgt, sodass das Gerät automatisch von einer gewünschten Zuordnung ausgeht und diese dann fixiert. Auch bei diesem Beispiel ist die Reihenfolge, welche der Tasten zuerst gedrückt wird, nicht festgelegt.

Um eine Fehlbedienung nach bereits erfolgter Bedienung zu erschweren, können nach Anwahl einer Option aus dem zweiten, dritten oder vierten Übersichtsfeld 54, 68 bzw. 82 die nicht ausgewählten, übrigen Optionen ausgeblendet werden. Wird beispielsweise aus dem dritten Übersichtsfeld 68 die Garanwendung 70 gewählt, werden die übrigen Garanwendungen 72 bis 80 sicherheitshalber ausgeblendet oder klappen ein, damit der Bediener nicht versehentlich auf eine dieser Tasten kommt und die Garanwendung ändert. Entsprechendes gilt für die anderen Übersichtsfelder 54 und 82.

Alternativ hierzu sind in der ersten Menüebene nicht, wie in Figur 2 dargestellt, alle Übersichtsfelder 54, 68 und 82 dargestellt, sondern nur zwei oder sogar nur eines der Übersichtsfelder 54, 68, 82. Damit der Benutzer möglichst schnell in ein anderes Übersichtsfeld springen kann, ist ein Feld 130 permanent vorhanden, in dem eines der Übersichtsfelder 54, 68 und 82 gewählt und damit angezeigt werden kann. Dieses Feld enthält sogenannte Rückholtasten, jeweils eine Rückholtaste für das zweite, dritte und vierte Übersichtsfeld 54, 68, 82. Die virtuelle Taste "Bons" steht für Garanwendungen und damit für das Anzeigen des dritten Übersichtsfeld 68, die virtuelle Taste "Konfiguration" steht für Garraumunterteilung und damit für das Anzeigen des zweiten Übersichtsfelds 54, und die virtuelle Taste "Belegung" steht für Garraumunterteilungen mit zugeordneten Garanwendungen und damit für das Anzeigen des vierten Übersichtsfelds 82.

Eine weitere Möglichkeit zur Reduzierung der angezeigten Informationen besteht darin, dass in der Steuerung 24 die Verwendung des Bedienmenüs, gegebenenfalls bedienerspezifisch, abgespeichert wird. Die Steuerung 24 merkt sich also, welche Übersichtsfelder der jeweilige Bediener bevorzugt verwendet und blendet z. B. das am seltensten verwendete Übersichtsfeld 54, 68 oder 82 aus der ersten Menüebene aus, oder es blendet nur das zuletzt verwendete Übersichtsfeld 54, 68 oder 82 ein und die übrigen zuerst einmal aus, wobei diese durch einen entsprechenden Tastendruck sofort wieder in der ersten Menüebene erscheinen können.

Es bestehen optional noch weitere Möglichkeiten, das dargestellte Verfahren zum Anzeigen des Bedienmenüs und zum Ansteuern des Geräts bedienerfreundlich zu gestalten. Diese werden anschließend erläutert, sie können in Kombination oder einzeln realisiert werden.

Wenn der Bediener eine Garanwendung auf einen bereits belegten Bereich 42 bis 52' legen möchte, d. h. in diesem Bereich erfolgt gerade eine Garanwendung, so erscheint ein Hinweis auf dem Touchscreen, und die laufende Garanwendung kann abgebrochen und durch die neue ersetzt werden. Dies kann beispielsweise nach einer bestimmten, erforderlichen Betätigung oder nach einer vorgegebenen Zeit erfolgen, in der kein Abbruch eingeleitet wird.

Die Garanwendung selbst kann beispielsweise sofort beginnen, wenn einem Bereich 42 bis 52' eine Garanwendung 70 bis 80 zugeordnet ist, entweder nach Zeitablauf oder nach zusätzlichem Betätigen einer entsprechenden virtuellen Taste oder einem weiteren Klick auf das Anwahlfeld oder den Bereich.

Wählt der Bediener beispielsweise eine Garanwendung aus, die ein Abtrennen eines Bereichs erfordert, wie das Frittieren, so wird der Bediener nach Auswahl der Garanwendung 80 "Frittieren" durch einen entsprechenden Hinweis auf dem Touchscreen aufgefordert, eine Garraumabtrennung einzusetzen. Dies erfolgt bei flüssigen Garmedien oder auch bei flüssigen Gargütern (z. B. Suppen).

Eine Erweiterung eines ausgewählten Bereichs, dem bereits eine Garanwendung zugeordnet ist, kann beispielsweise durch anschließendes Antippen oder Wischen vom belegten Bereich in den zusätzlich hinzukommenden Bereich erfolgen. Wird beispielsweise im Bereich 42 geschmort, kann nach der Zuordnung von "Schmoren" zum Bereich 42 der Bereich 44 angetippt werden, oder der Bediener wischt mit dem Finger vom Bereich 42 in den Bereich 44, und entsprechend erweitert sich die Garanwendung "Schmoren" auf den Bereich 44. Dieses Erweitern kann eventuell durch Fixieren (Doppeltippen, Drücken einer anderen definierten Taste wie der zuvor erwähnten Fixiertaste oder Drücken des Drehreglers 30) erfolgen oder aber durch Zeitablauf nach der letzten Betätigung, wenn in einem Zeitfenster keine weitere Betätigung erfolgt.

Weitere Anwahlmöglichkeiten für Bereiche 42 bis 52', die aktiviert werden sollen oder denen bestimmte Garanwendungen zugeordnet werden sollen, sind beispielsweise:
a) Antippen mehrerer Bereiche 42 bis 52' gleichzeitig mit mehreren Fingern (Multitouch),
b) Einzelberührung eines Bereichs 42 bis 52' und Aufziehen eines entsprechenden Rechtecks durch Kontaktierung einer Ecke, wobei mit dem Aufziehen dann gleichzeitig die überfahrenen Bereiche aktiviert werden,
c) Berührung eines Bereichs 42 bis 52' und anschließendes Drehen des Drehreglers 30 zur Erweiterung der markierten Bereiche zeilen- und spaltenweise,
d) Ziehen eines Rahmens um Bereiche 42 bis 52' mit dem Finger, um diese zu markieren und auszuwählen,
e) Antippen von zwei Punkten, die die Diagonale eines Rechtecks symbolisieren, wobei die im Rechteck liegenden oder teilweise liegenden Bereiche 42 bis 52' dann ausgewählt sind, und/oder
f) Kennzeichnen einer Zeile oder Spalte und Herunterziehen oder seitlichen Verschiebens der Fläche, um angrenzende Flächen und damit Bereiche zu markieren.

Eine weitere Option zur Erhöhung der Übersichtlichkeit besteht darin, dass bei mehreren Garräumen diese permanent symbolisch nebeneinander angezeigt werden und selbst dann, wenn einer der Garräume größer dargestellt wird, in den anderen kleiner dargestellten Garräumen am Touchscreen angezeigt wird, welche Belegung und/oder Garprozesse dort gerade ablaufen. Alternativ oder zusätzlich können auch für diesen kleiner dargestellten Garraum Meldungen angezeigt werden, zum Beispiel über die Restgarzeit.

Eine weitere Erleichterung bei der Bedienung und der Ansteuerung des Gargeräts in Kombination mit einem verbesserten Verfahren zum Anzeigen des Bedienmenüs ergibt sich dadurch, dass nach Zuordnung von Garbereichen 42 bis 52' und Garanwendungen 70 bis 80 im ersten Übersichtsfeld 38 angezeigt wird, beispielsweise durch Aufleuchten von entsprechenden Bereichen oder Einblenden von Pfeilen, auf welche weiteren Bereiche 42 bis 52' die gewählte Garanwendung ausgeweitet werden kann. Diese weiteren Bereiche können dann durch Anwählen, z. B. mittels Antippen oder Wischen, mit der gerade gewählten Garanwendung verknüpft werden. Damit wird verhindert, dass Bereiche 42 bis 52' mit Garanwendungen verknüpft werden, die aufgrund von zu unterschiedlichen Garanwendungen in einem Nachbarbereich zu nicht optimalen Garergebnissen führen würden. Eine solche empfohlene Ausweitung der Bereiche für eine bestimmte Garanwendung lässt sich auch weiter staffeln, indem z. B. die Eignung in mehreren Stufen, z. B. gut, bedingt oder nicht geeignet, angezeigt wird. Dabei können z. B. gut geeignete Bereiche grün unterlegt werden, bedingt geeignete gelb und nicht geeignete rot. Optional lassen sich nicht geeignete Bereiche auch gar nicht anwählen, sie werden von der Steuerung gesperrt.

Ferner kann bei mehreren Garräumen bei Anwahl einer Garraumunterteilung von der Steuerung 24 angezeigt werden, welcher der Garräume besonders gut für die gewünschte Garraumunterteilung geeignet ist, beispielsweise weil hier andere Bereiche mit ähnlichen Garanwendungen bereits bestückt sind oder diese Bereiche frei sind oder eine geeignete Restwärme in bestimmten Bereichen herrscht.

Gibt es mehrere Vorschläge, so lassen diese sich einzeln abrufen, z. B. durch Drehen des Drehreglers 30 oder durch Wischen. Eine entsprechende Auswahl kann dann durch Benutzen des Touchscreens oder z. B. durch Drücken des Drehreglers 30 vorgenommen werden.

Umgekehrt kann auch vor der Zuordnung von Garanwendungen zu Bereichen die Steuerung 24 Vorschläge machen, welche Bereiche optimalerweise zugeordnet werden können, also welche Bereiche geeignet sind. Wird zuerst die Garanwendung 70 bis 80 gewählt, zeigt anschließend die Steuerung im Touchscreen diejenigen Bereiche 42 bis 52' an, in der die ausgewählte Garanwendung am besten durchgeführt wird. Die nicht geeigneten Bereiche oder weniger geeigneten Bereiche werden dann entsprechend gar nicht angezeigt, als bedingt geeignet angezeigt oder als gut geeignet angezeigt.

Folgende Rahmenparameter können einzeln oder in beliebiger Kombination bei der Berechnung in der Steuerung 24 eingehen, um die Bereiche 42 bis 52' auszuwählen, die sich für eine Garanwendung gut oder bedingt eignen:
a) Position und Anzahl der Wassereinläufe zum Einfüllen von Wasser als Garmedium,
b) Position der sogenannten Ausgussschnaupe zum Auskippen des Gargutes,
c) Position und Anzahl der Kerntemperaturfühler zum Messen der Temperatur des Garguts,
d) Notwendigkeit, Verfügbarkeit, Form und aktuelle oder mögliche Position einer Garraumabtrennung für Garanwendungen mit flüssigem Garmedium oder flüssigem Gargut,
e) Position des sogenannten Garraumabflussventils zum Entleeren von Garmedium,
f) Position des Füllstandsmesssystems zum Erfassen der eingefüllten Menge von flüssigem Garmedium oder flüssigem Gargut,
g) Form und/oder Größe von Garkörben, die in einen der Tiegel oder in einem abgetrennten Bereich des Tiegels 16 eingesetzt werden, z. B. zum Frittieren,
h) die Garanwendungen selbst, also z. B. Kochen, Braten, Schmoren, Frittieren, Dämpfen, Druckgaren usw.,
i) Garmedien, in denen die Garanwendungen durchgeführt werden, z. B. Öl, Wasser, Dampf usw.,
j) Position des Deckels (Deckel muss z. B. beim Dämpfen geschlossen und beim Braten offen bleiben),
k) Verriegelung des Deckels, z. B. beim Druckgaren nötig, beim Braten nicht nötig,
l) aktuelle Temperatur der Betriebsoberfläche oder des Garmediums oder Solltemperatur der angewählten Garanwendung,
m) Temperaturen der angrenzenden Bereiche,
n) Sicherheitskriterien, z. B. kein Kochen und Frittieren nebeneinander,
o) Gargut, z. B. kein Fisch und Fleisch nebeneinander aus hygienischen Gründen, um Allergene nicht in andere Bereiche eindringen zu lassen und um Geschmacksübertragung oder Beeinflussung der Farbe des Garguts zu vermeiden,
p) Ergonomie, weil z. B. Garanwendungen mit vielen mechanischen Eingriffen wie Wenden besser in leichter zugänglichen und damit vorderen Bereichen 50 bis 52' erfolgen sollten,
q) Energieeinsparungspotenzial, durch Positionierung leistungsintensiver Garanwendungen nebeneinander oder Nutzung der Restwärme der Oberfläche und/oder
r) verfügbare Leistung des Geräts oder des Stromnetzes, wenn mehrere Garräume nebeneinander oder übereinander angeschlossen sind oder mehrere Gargeräte parallel laufen sollen, um Garräume oder Gargeräte nicht übermäßig hochzufahren, wenn beispielsweise in einem anderen Garraum oder in einem anderen Gargerät gerade hohe Temperaturen herrschen, die sich zum Garen bei der gewünschten hohen Temperatur neuer Gargüter eignen.

Die vorgenannten Rahmenparameter können auch unterschiedlich gewichtet sein, also verschieden hoch priorisiert werden. Die Wichtung kann vom Gargerät vorgegeben werden oder vom Bediener individuell eingestellt werden.

Die Steuerung greift bei der Bestimmung, welcher Bereich für einen vom Benutzer geplanten Garprozess am besten geeignet ist, auch auf Informationen zu, die über die gerade laufenden Garprozesse hinausgehen.

Beispielsweise kann die Steuerung berücksichtigen, welche Garprozesse in der Zukunft geplant sind. Beispielsweise kann sie, wenn demnächst eine größere Menge an Suppe gekocht werden muss, nur noch dann einen Garbereich als geeignet "freigeben", wenn der neue Garprozess rechtzeitig abgeschlossen sein wird.

Die Steuerung kann auch externe Parameter wie beispielsweise eine maximale Anschlussleistung des Gargeräts oder auch einer ganzen Gruppe von Gargeräten berücksichtigen, die mit der Steuerung vernetzt sind. Beispielsweise können neue Bereiche für einen bestimmten Garprozess nur dann als geeignet freigegeben werden, wenn im Hinblick auf die aktuell geplanten anderen Garprozesse eine vorgegebene Anschlussleistung nicht überschritten wird.

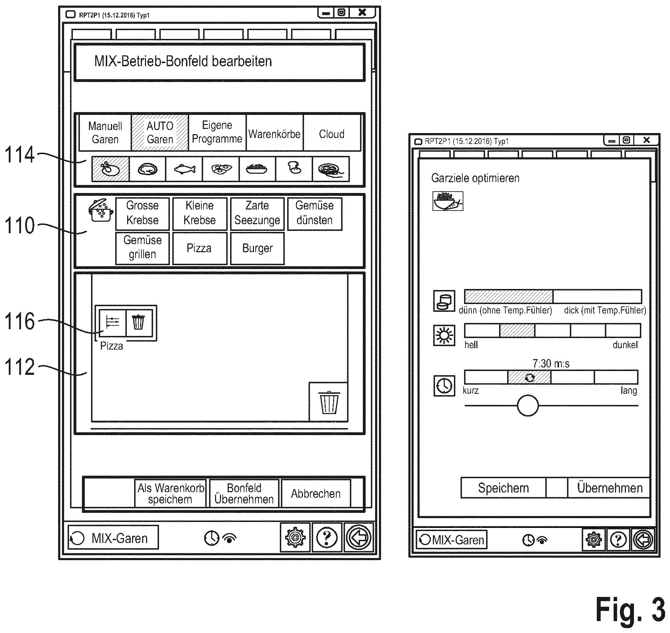

Anhand der Figuren 3 bis 5 wird im Folgenden erläutert, wie die Anzeige umprogrammiert werden kann und damit das Verfahren zum Anzeigen des Bedienmenüs und die Ansteuerung des Geräts geändert werden kann.

Figur 3 zeigt ein Untermenü (links) und ein weiteres Untermenü (rechts), in dem die Garanwendungen 70 bis 80 modifiziert und damit individualisiert werden können und in dem vor allem diejenigen Garanwendungen 70 bis 80 ausgewählt werden können, die im dritten Übersichtsfeld angezeigt werden sollen. Im linken Untermenü kann auch die Reihenfolge der im dritten Übersichtsfeld 68 dargestellten Garanwendungen 70 bis 80 verändert und eingestellt werden.

Beispielsweise wird hierzu die Taste 98 gedrückt, woraufhin die linke Anzeige und damit eine Untermenüebene geöffnet wird. In diesem Untermenü kann der Bediener aus dem Feld 114 auswählen, ob die zu kreierte Garanwendung über "Manuelles Garen", "AUTO Garen", "Eigene Programme", "Warenkörbe" oder über die "Cloud" erfolgen soll. Im dargestellten Beispiel wird für das dritte Übersichtsfeld 68 eine virtuelle Taste "Pizza" erstellt. Der Bediener wählt also "AUTO Garen" im Feld 114 und dann "Pizza" im Feld 110, worauf er im Feld 112 einen Symbol 116 "Pizza" erhält. Dasselbe kann er auch beispielsweise mit einem manuell zu garenden Steak machen oder einer aus der Cloud herunterzuladen speziellen Garanwendung. Nachdem der Bediener im Feld 112 alle seine von ihm gewünschten Garanwendungen zusammengestellt hat, kann er sie in das dritte Übersichtsfeld 68 übernehmen, indem er die Taste "Bonfeld Übernehmen" drückt. Sollte die Anzahl der virtuellen Tasten größer sein als die Anzahl der im dritten Übersichtsfeld 68 möglichen anzuzeigenden Garanwendungen, so werden nur beispielsweise die ersten sechs Garanwendungen angezeigt, die anderen können durch eine Wischgeste herbeigescrollt werden.

In dieser ersten Menüebene können aber auch Warenkörbe erzeugt werden, d. h. Sammlung einer beliebig großen Anzahl von Anwendungen. Diese Anwendungen können dann wiederum bei Bedarf aus dem Warenkorb aufgerufen werden. Beispielsweise kann sich der Bediener einen Warenkorb "Frühstück" erzeugen, in dem alle Garanwendungen aufgeführt sind, die er zum Zubereiten eines Frühstücks in einem Hotel benötigt. Garanwendungen können auch aus Warenkörben über die Taste im Feld 114 in das dritte Übersichtsfeld 68 gezogen werden oder über Taste "Als Warenkorb speichern" in einen Warenkorb aufgenommen werden.

Im dargestellten Untermenü können aber auch über die Taste "Eigene Programme" individuelle Garanwendungen erzeugt werden oder bestehende Garanwendungen modifiziert werden. Dies geschieht, indem das rechts dargestellte Untermenü aufgerufen wird, in welchem die Garziele eingestellt oder optimiert werden können. Hier ist beispielsweise wählbar, ob das Gargut eher hell oder dunkel gegart werden soll, eher dick oder dünn ist, mit oder ohne Temperaturfühler gegart werden soll und mit welcher Garzeit. Im dargestellten Untermenü können aber auch über die Taste 116 Anwendungen individuell parametrisiert werden. Das "Übernehmen" der Parametrisierung führt zu einer temporären Aufnahme der Anwendung in Feld 112 bzw. 68. Das "Speichern" durch Drücken der entsprechenden Taste erfolgt dauerhaft, d. h. die Garanwendungen bleiben auch bestehen, wenn das Gargerät ausgeschaltet wird oder auch komplett vom Strom genommen wird.

Die Anwahltasten, die erzeugt werden, werden automatisch und selbstständig in der ersten Menüebene angezeigt, zumindest die zuerst positionierten.

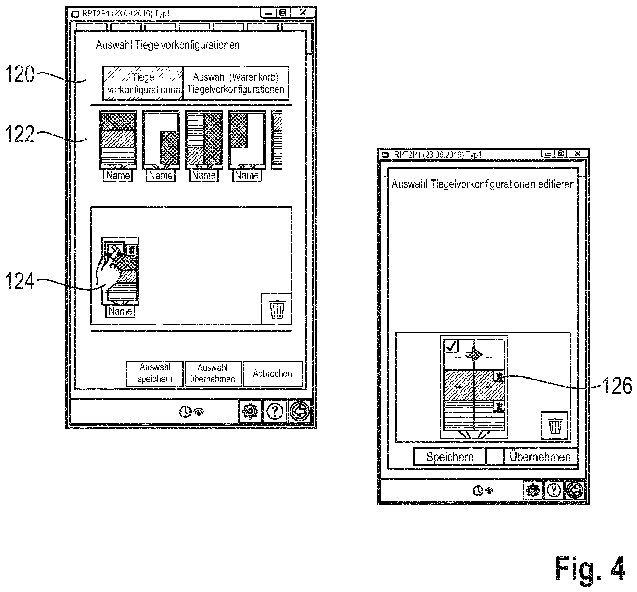

In Figur 4 ist dargestellt, welche Garraumunterteilungen im ersten Übersichtsfeld 54 an welcher Stelle angezeigt werden sollen oder wie Garraum Unterteilungen individualisiert, optimiert und zusätzliche Garraumunterteilungen erzeugt werden können.

Auch hier wird beispielsweise über Bedienen der virtuellen Taste 100 das Untermenü gemäß Figur 4 aufgerufen. Im Feld 120 kann ausgewählt werden, ob der Bediener aus im Gerät bereits abgespeicherten vor Konfigurationen auswählen möchte oder aus vor Konfigurationen, die im Warenkorb gespeichert sind. Im dargestellten Beispiel hat er die virtuelle Taste "Tiegel vorkonfigurationen" gewählt, woraufhin ihm im Feld 122 sämtliche abgespeicherten vorkonfigurierten Garraum Unterteilungen angezeigt werden. Auch hier kann weiter nach links oder rechts gescrollt werden. Der Benutzer hat dann das linke Symbol für eine Vorkonfiguration gewählt und beispielsweise per Drag-and Drop in das Feld 124 gezogen. Dies erfolgt bezüglich der Bedienung exakt so wie für die Garanwendungen im Untermenü gemäß Figur 3. der Bediener kann aber auch, ähnlich wie im rechten Untermenü in Figur 3 eine individuelle Tiegelkonfiguration erzeugen, indem er eine Vorkonfiguration wählt und dies danach editiert, was im rechts dargestellten Untermenü erfolgt. Hier kann er die Konfiguration von Bereichen 42 bis 52' löschen, bestätigen oder ändern. Das "Übernehmen" der Parametrisierung führt zu einer temporären Aufnahme der Anwendung in Feld 124 bzw. 54.

Durch Auswahl und Drücken der Tasten "Abspeichern" lassen sich Garraumunterteilungen dauerhaft abspeichern, d. h. die Garanwendungen bleiben auch bestehen, wenn das Gargerät ausgeschaltet wird oder auch komplett vom Strom genommen wird.

Nachdem das Feld 124 komplettiert wurde, kann die Auswahl übernommen werden, wonach im zweiten Übersichtsfeld 54 die Garraumunterteilungen in der Reihenfolge angezeigt werden, in der sie im Feld 124 positioniert waren.

Die Steuerung 24 ist so ausgebildet, dass sie bei gleichen Garraumunterteilungen, die jedoch unterschiedliche zugeordnete Garanwendungen aufweisen, einen optischen Hinweis ausgibt, damit die Symbole für Garraumunterteilungen nicht identisch erscheinen. Beispielsweise kann auch selbstständig ein Index erzeugt werden.

Wie in Figur 2 zu sehen ist, hat jede Anwahltaste 84 bis 88 ein Namensfeld 127, ebenso wie jede Garanwendung und jede Garraumunterteilung. Dieses Namensfeld 127 kann über den Touchscreen beim Abspeichern neu positioniert, ditieren beschriftet werden. Wenn die Steuerung einen Index erzeugt, wird dieser Index ins Namensfeld 127 eingespielt.

Das dargestellte Verfahren und das dargestellte Gargerät und seine Steuerung 24 erlauben es auch, dass werkseitig vorkonfigurierte Garraumunterteilungen 56 bis 66, Garanwendungen 70 bis 80 und/oder Garraumunterteilungen mit zugeordneten Garanwendungen, hier die Anwahltasten 84 bis 88 bleibend gelöscht werden. Dieser Löschvorgang geht über die Anschaltzeit des Gargeräts und auch über ein Abkoppeln vom Stromnetz hinaus.

Sämtliche vorgenannten Verfahren zum Erzeugen neuer Anwahltasten in den Übersichtsfeldern 54, 68 und 82 können auch im laufenden Garbetrieb vorgenommen werden, um Zeit zu sparen.

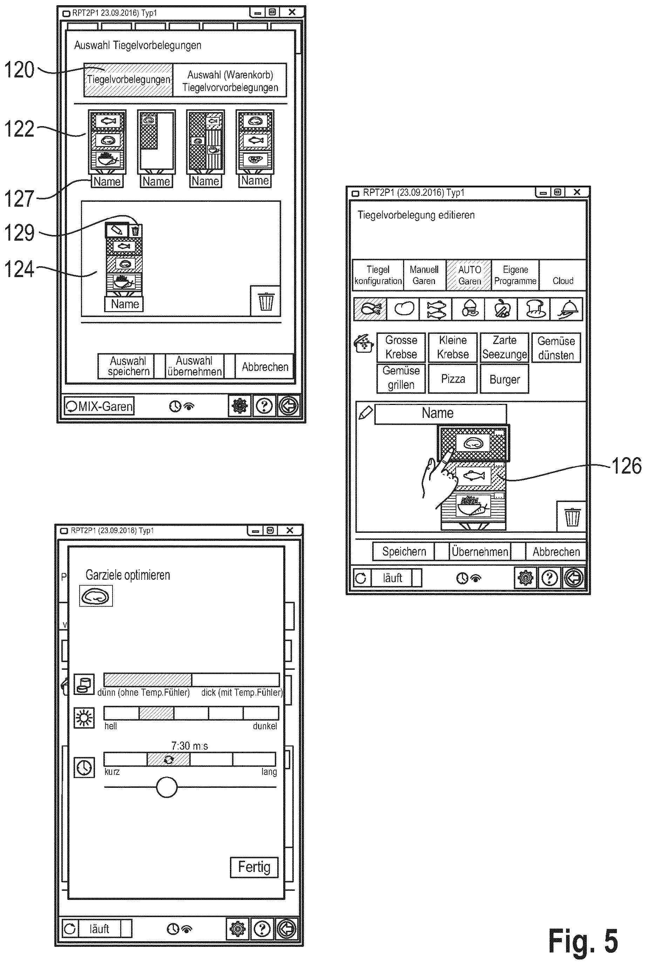

Ähnlich wie zuvor anhand der Figuren 3 und 4 können auch neue virtuelle Anwahltasten für das vierte Übersichtsfeld 82 gewählt, positioniert oder bestehende Anwahltasten 84 bis 88 geändert und wieder temporär oder dauerhaft abgespeichert werden. Dies ist in Figur 5 dargestellt.

Das erste Untermenü (links oben) ist identisch zu dem nach Figur 4 aufgebaut, hier sind lediglich die entsprechenden Anwahltasten dadurch gekennzeichnet, dass sie eine Kombination von Garraumunterteilungen und zugeordneten Garanwendungen zeigen. Da die Funktionalität und die Unterteilung dieses Untermenüs dem nach Figur 4 entspricht, werden für dieselben und funktional gleichen Felder und Bereiche die bereits eingeführten Bezugszahlen beibehalten. Der Bediener kann also zuerst einmal im Feld 120 wählen, ob er die Tiegel Vorbelegungen im Gerät oder aus dem Warenkorb wählen will, die dann entsprechend im Feld 122 angezeigt werden und aus dem Feld 122 über Drag-and-Drop in das Feld 124 geschoben und dort positioniert und in der gewünschten Reihenfolge festgelegt werden können.

Ein die in das Feld 124 gezogene virtuelle Taste hat am oberen Rand eine kleine Pop-over Taste 129, über die das rechte Untermenü geöffnet werden kann und über das nicht nur Garparameter aufgerufen und verändert werden können, sondern auch gelöscht werden können. Ferner kann die virtuelle Taste für das leichtere Editieren angewählt werden, woraufhin sich eine weitere Bedienebene öffnet.

In dem rechten Untermenü kann dann die virtuelle Taste mit allen Vorbelegungen editiert werden, und durch Aufrufen eines weiteren Untermenüs, das links unten dargestellt ist, können auch die Garziele wie die zuvor anhand von Figur 3 erläuterten Garziele eingestellt oder geändert werden.

Werkseitig bereits abgelegte Garanwendungen, Garraumunterteilungen und/oder Anwahltasten mit Garanwendung samt Unterteilung lassen sich dauerhaft vom Bediener löschen (evtl. nur für ihn) oder in eine Untermenüebene schieben.

Generell können aber diese Garraumunterteilungen mit Vorbelegung von Garanwendungen auch aus Garraumunterteilungen, manuellen Betriebsarten, Garpfaden, eigenen Programmen und Anwendungen aus der Cloud manuell erstellt werden. Eine neue Anwahltaste kann beispielsweise dadurch erzeugt werden, dass in der ersten Menüebene Bereiche ausgewählt werden, dann Garanwendungen zugeordnet werden und diese bleibend gespeichert oder temporär zur Übernahme gespeichert werden. Auch hier können neue oder geänderte Garraumunterteilungen mit zugeordneten Garanwendungen direkt als neue Anwahltasten in das dritte Übersichtsfeld 82 nach dem Abspeichern übernommen werden.

Nach Erzeugen von neuen Anwahltasten für die Übersichtsfelder 54, 68, 82 können diese dahingehend dauerhaft abgespeichert werden, als dass sie über den Garvorgang, die Anschaltzeit des Gargeräts und dessen Abkoppelung vom Stromnetz hinaus gespeichert bleiben.

Die Darstellung und Unterteilung der Garräume in Bereiche 42 bis 52' kann sich an den Heizeinheiten orientieren, den Positionen des Wassereinlaufs, den Positionen der Garraumabtrennungen und/oder den Positionen des Garraumabflusses und/oder dem Zubehör.

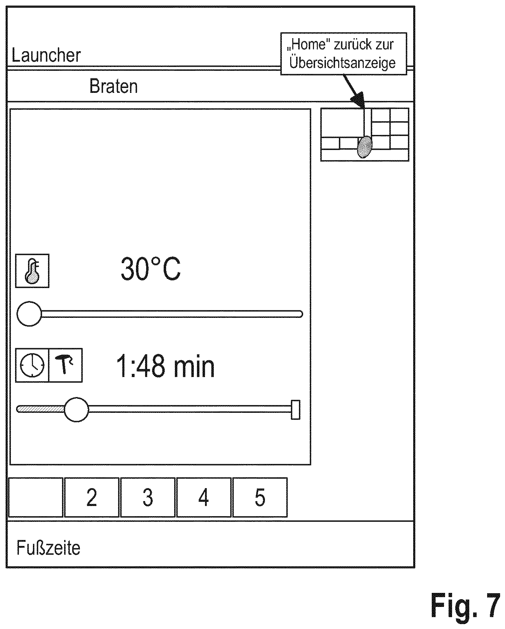

Darüber hinaus können in jedem einzelnen Bereich 42 bis 52 nach dessen Aktivierung entweder sofort Informationen zu wenigstens den wichtigsten Parametern (z. B. noch verbleibende Garzeit und/oder Gartemperatur) eingeblendet werden (siehe Figur 7), oder durch Antippen des Bereichs werden in einem Untermenü diese Informationen sofort sichtbar. Die Informationen können aber auch an anderer geeigneter Stelle der Anzeige erscheinen, oder die Anzeige kann umgeschaltet werden.

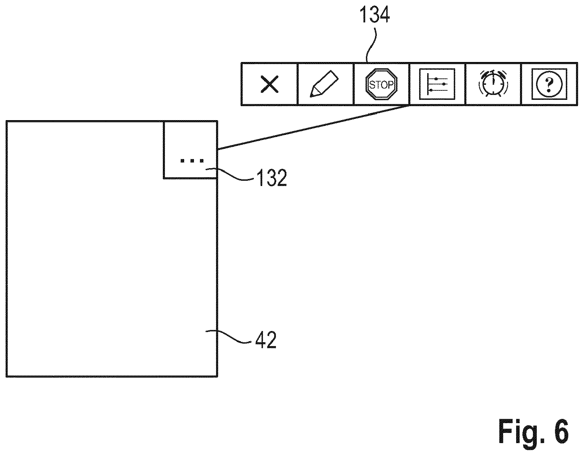

Eine weitere oder zusätzliche Option für schnelle Zugänglichkeit der Garanwendungen in den Bereichen 42 bis 52' ist in Figur 6 dargestellt. Hier ist beispielhaft der Bereich 42 dargestellt, der an seinem oberen, rechten Ende eine virtuelle Taste, eine sogenannte Pop-over-Taste 132 aufweist. Durch Anwahl dieser Taste 132 wird ein Pop-over-Menü 134 angezeigt, in dem folgende virtuelle Tasten eingeblendet werden können: Stopptaste, Timertaste, Löschtaste, Taste zum Ändern der Bereiche 42 bis 52'und Änderungstaste zum Öffnen eines Untermenüs sowie eventuell Hilfetaste. Es ist aber auch möglich, den Bereich 42 direkt zu drücken, worauf sich ein Menü öffnet, in dem beispielsweise die Garparameter eingestellt oder auch nur angezeigt werden können. Eine andere Möglichkeit ist, das ein Druck auf die Taste 42 das Pop-Over.Menü 134 öffnet, oder bei einem Druck auf die Taste 42 direkt eine Funktion einer von aus dem Pop-Over-Menü 134 direkt hinterlegten Funktionen aufgerufen wird.

Schließlich zeigt Figur 7, wie die Garparameter schnell verändert werden können. Ein belegter Garraumbereich 42 bis 52' wird beispielsweise wie oben erwähnt aufgerufen, sodass sich das Untermenü gemäß Figur 7 öffnet. Bereits in diesem Untermenü werden dann sämtliche wichtige Parameter dargestellt, die auch unmittelbar geändert werden können. Alternativ können diese Parameter auch über das in Figur 6 gezeigte Pop-up-Menü angewählt und entsprechend geändert werden.

Eine zweite Ausführungsform des erfindungsgemäßen Verfahrens sieht vor, dass in der ersten Menüebene das erste Übersichtsfeld 54 nicht vorhanden ist. Entweder ist das dritte Übersichtsfeld 68 oder das vierte Übersichtsfeld 82 vorgesehen, sodass anstatt dreier Übersichtsfelder 54, 68 und 82 nur das Übersichtsfeld 68 oder 82 vorhanden ist. Somit ist mehr Platz geschaffen für das erste Übersichtsfeld 38. Gegebenenfalls kann zwischen den Übersichtsfeldern 68 und 82 gesprungen werden.

Was das vorliegende Verfahren anbelangt, so ist zu betonen, dass in den bevorzugten Ausführungsformen in der ersten Menüebene stets, d. h. auch während der Garvorgänge, die Möglichkeit besteht, Bereiche zu ändern oder Garparameter zu ändern. Hierzu ist es teilweise nicht einmal nötig, in ein Untermenü zu gehen, vielmehr können die Änderungen in der ersten Menüebene stattfinden, z. B. indem einem Bereich eine andere Garanwendung zugeordnet wird oder ein weiterer Bereich mit einer Garanordnung versehen wird. Mit Aufruf nur eines Untermenüs (siehe beispielsweise Figuren 6 oder 7), lassen sich Garparameter völlig ändern oder eine Garanwendung löschen. Die Bedientiefe ist extrem gering, was die Durchführung des Verfahrens sehr transparent und flexibel macht.

Der Benutzer selbst hat aber nach wie vor alle Anwahlmöglichkeiten und wird aber gleichzeitig mittels Vorschlägen für die Erweiterung von Garbereichen für Garanwendungen unterstützt.

Wie bereits zuvor erläutert, kann der Bediener nicht nur einen Garraum, sondern sämtliche Garäume des Gargeräts konfigurieren.

Die Garraumunterteilung muss nicht auf Heizfelder beschränkt sein, sondern gegebenenfalls lassen sich im ersten Übersichtsfeld 38 auch Bereiche 42 bis 52' auswählen, die außerhalb der Grenzen von benachbarten Heizfeldern liegen, d. h. beispielsweise die Bereiche 42 und die linke Hälfte des Bereichs 44 auswählen.

## Patentansprüche

1. Verfahren zum Anzeigen wenigstens eines Bedienmenüs eines Gargeräts (10) auf einem Touchscreen (26) und zum Ansteuern des Gargeräts (10), wobei das Bedienmenü verschiedene Menüebenen aufweist, **dadurch gekennzeichnet, dass** in einer ersten Menüebene gleichzeitig angezeigt werden:
a) ein erstes Übersichtsfeld (38) zumindest eines eine ebene Heizfläche bildenden Garraums mit zur separaten Aktivierung in der ersten Menüebene direkt anwählbaren Bereichen (42 - 52') und, zusätzlich, zumindest eines der folgenden Übersichtsfelder
b) ein zweites Übersichtsfeld (54) mit mehreren verschiedenen vorgegebenen Garraumunterteilungen (56 - 66), die unterschiedliche, separat aktivierbare Bereiche (42 - 52') des Garraums aufweisen, wobei die vorgegebenen Garraumunterteilungen (56 - 66) zur Aktivierung in der ersten Menüebene direkt anwählbar sind,
c) ein drittes Übersichtsfeld (68) mit mehreren verschiedenen Garanwendungen (70 - 80), die zur Aktivierung in der ersten Menüebene direkt anwählbar sind, und.
d) ein viertes Übersichtsfeld (82) mit verschiedenen vorgegebenen Garraumunterteilungen mit bereits zugeordneten Garanwendungen, die in der ersten Menüebene direkt anwählbar sind.

2. Verfahren nach Anspruch 1, **dadurch gekennzeichnet, dass** in der ersten Menüebene auch das dritte Übersichtsfeld (68) angezeigt wird und, ohne die erste Menüebene zu verlassen, Bereiche (42 - 52') des Garraums angewählt und den angewählten Bereichen Garanwendungen (56 - 66) zugeordnet werden können.

3. Verfahren nach Anspruch 1 oder 2, **dadurch gekennzeichnet, dass** in der ersten Menüebene zusätzlich zum ersten Übersichtsfeld (38) nur das zweite, dritte oder vierte Übersichtsfeld (54, 68, 82) angezeigt werden und über zusätzliche virtuelle Tasten ausgewählt werden kann, ob das zweite, dritte oder vierte Übersichtsfeld (54, 68, 82) das zusätzlich angezeigte Übersichtsfeld ist.

4. Verfahren nach einem der vorhergehenden Ansprüche, **dadurch gekennzeichnet, dass** nach Anwahl einer Option in dem zweiten, dritten und/oder vierten Übersichtsfeld (54, 68, 82) die übrigen Optionen dieser Übersichtsfelder ausgeblendet werden.

5. Verfahren nach einem der vorhergehenden Ansprüche, **dadurch gekennzeichnet, dass** in einer Steuerung (24) die Verwendung des Bedienmenüs abgespeichert wird und bei einer nachfolgenden Bedienung entweder aus der Gruppe des zweiten, dritten und vierten Übersichtsfelds (54, 68, 82) zumindest das am seltensten verwendete Übersichtsfeld aus der ersten Menüebene ausgeblendet wird oder das zuletzt verwendete Übersichtsfeld (54, 68, 82) eingeblendet und die übrigen Übersichtsfelder ausgeblendet werden.

6. Verfahren nach Anspruch 5, **dadurch gekennzeichnet, dass** in der ersten Menüebene eine Rückholtaste für jedes ausgeblendete Übersichtsfeld (54, 68, 82) vorhanden ist, wobei bei Anwahl einer Rückholtaste das zugeordnete Übersichtsfeld wieder in der ersten Menüebene erscheint.

7. Verfahren nach einem der vorhergehenden Ansprüche, **dadurch gekennzeichnet, dass** ausgewählten Bereichen (42 - 52') des Garraums Garanwendungen (70 - 80) oder umgekehrt Garanwendungen (70 - 80) ausgewählte Bereiche (42 - 52') des Garraums zugeordnet werden, indem im ersten Übersichtsfeld (38) die Bereiche und im dritten Übersichtsfeld (68) Garanwendungen (70 - 80) angewählt werden, insbesondere durch Antippen oder eine Drag-and-Drop-Funktion.

8. Verfahren nach Anspruch 7, **dadurch gekennzeichnet, dass** nach Zuordnung von Bereichen (42 - 52') und Garanwendungen (70 - 80) im ersten Übersichtsfeld (38) angezeigt wird, auf welche weiteren Bereiche die gewählte Garanwendung (70 - 80) ausgeweitet werden kann.

9. Verfahren nach einem der vorhergehenden Ansprüche, **dadurch gekennzeichnet, dass** nach einer Auswahl einer Garanwendung (70 - 80) im ersten Übersichtsfeld (38) zumindest ein durch eine zugeordnete Steuerung (24) optimiert zugeordneter Bereich (42 - 52') angezeigt wird, der angewählt werden kann, um die ausgewählte Garanwendung (70 - 80) auf diesen Bereich zu legen oder auf diesen Bereich auszuweiten.

10. Verfahren nach einem der vorhergehenden Ansprüche, **dadurch gekennzeichnet, dass** ein Untermenü aus der ersten Menüebene aufgerufen werden kann, in welchem Garanwendungen (70 - 80) individualisierbar sind oder in welchem die in der ersten Menüebene in dem zweiten bis vierten Übersichtsfeld (54, 68, 82) anzuzeigenden vorgegebenen Garraumunterteilungen, vorgegebenen Garanwendungen bzw. vorgegebenen Garraumunterteilungen mit bereits zugeordneten Garanwendungen ausgewählt und/oder positioniert werden können.

11. Verfahren nach einem der vorhergehenden Ansprüche, **dadurch gekennzeichnet, dass** in einem Untermenü für das zweite, dritte und/oder vierte Übersichtsfeld (54, 68, 82) zusätzliche, individuell parametrisierbare Anwahltasten erzeugt und dauerhaft abgespeichert werden können, insbesondere wobei die zusätzlichen Anwahltasten nach dem Abspeichern in das zweite, dritte und/oder vierte Übersichtsfeld (54, 68, 82) aufgenommen und selbstständig in der ersten Menüebene angezeigt werden.

12. Verfahren nach einem der vorhergehenden Ansprüche, **dadurch gekennzeichnet, dass** in der ersten Menüebene und in dem ersten Übersichtsfeld (38) entweder mehrere Garräume mit in der ersten Menüebene anwählbaren und dadurch aktivierbaren Bereichen (42 - 52') der Garräume nebeneinander angezeigt werden oder Garräume einzelnen angewählt werden können, um allein angezeigt zu werden.

13. Verfahren nach einem der vorhergehenden Ansprüche, **dadurch gekennzeichnet, dass** ein Informations-Anzeigebereich in der ersten Menüebene vorhanden ist oder durch Anwahl in der ersten Menüebene eingeblendet werden kann, wobei im Informations-Anzeigebereich Informationen zu Parametern für jeden Bereich des Garraums enthalten sind.

14. Verfahren nach einem der vorhergehenden Ansprüche, **dadurch gekennzeichnet, dass** jeder Bereich (42 - 52') im ersten Übersichtsfeld (38) so anwählbar ist, dass, optional über Zwischenschaltung einer daraufhin eingeblendeten Pop-over-Taste (132), Zugang zu wenigstens einer der folgenden Tasten erfolgt, die eingeblendet werden: Stopptaste, Timertaste, Löschtaste, Taste zum Öffnen einer Funktion zum Ändern der gewählten Bereiche und Änderungstaste zum Öffnen eines Untermenüs.

15. Verfahren nach einem der vorhergehenden Ansprüche, **dadurch gekennzeichnet, dass** jeder Garraum mehrere Heizfelder hat und dass im ersten Übersichtsfeld (38) Bereiche ausgewählt werden können, die außerhalb der Grenzen zwischen benachbarten Heizfeldern liegen.

## Claims

1. A method of displaying at least one operating menu of a cooking device (10) on a touchscreen (26) and of driving the cooking device (10), the operating menu having different menu levels, **characterized in that** in a first menu level, the following are displayed at the same time:
a) a first overview field (38) of at least one cooking chamber forming a flat heating surface and having directly selectable areas (42 - 52') in the first menu level for separate activation, and, additionally, at least one of the following overview fields,
b) a second overview field (54) having a plurality of different predefined cooking chamber subdivisions (56 - 66), which include different, separately activatable areas (42 - 52') of the cooking chamber, the predefined cooking chamber subdivisions (56 - 66) being directly selectable in the first menu level for activation;
c) a third overview field (68) having a plurality of different cooking applications (70 - 80), which are directly selectable in the first menu level for activation; and
d) a fourth overview field (82) having different, predefined cooking chamber subdivisions with already allocated cooking applications, which are directly selectable in the first menu level.

2. The method according to claim 1, **characterized in that** in the first menu level, the third overview field (68) is also displayed, and areas (42 - 52') of the cooking chamber can be selected and cooking applications (56 - 66) can be allocated to the selected areas without leaving the first menu level.

3. The method according to claim 1 or 2, **characterized in that** in the first menu level, in addition to the first overview field (38) only the second, third or fourth overview field (54, 68, 82) are displayed, and a selection can be made by means of additional virtual keys as to whether the second, third or fourth overview field (54, 68, 82) is the additionally displayed overview field.

4. The method according to any of the preceding claims, **characterized in that** after selecting an option in the second, third and/or fourth overview field (54, 68, 82), the remaining options of these overview fields are hidden.

5. The method according to any of the preceding claims, **characterized in that** the use of the operating menu is saved in a controller (24) and, in a subsequent operation, either at least the most rarely used overview field from the group of the second, third and fourth overview fields (54, 68, 82) is hidden from the first menu level, or the last used overview field (54, 68, 82) is unhidden and the remaining overview fields are hidden.

6. The method according to claim 5, **characterized in that** in the first menu level, a retrieval key is provided for each hidden overview field (54, 68, 82), wherein, upon selecting a retrieval key, the associated overview field will appear in the first menu level again.

7. The method according to any of the preceding claims, **characterized in that** cooking applications (70 - 80) are allocated to selected areas (42 - 52') of the cooking chamber or, conversely, selected areas (42 - 52') of the cooking chamber are allocated to cooking applications (70 - 80), by selecting the areas in the first overview field (38) and cooking applications (70 - 80) in the third overview field (68), in particular by touching or by a drag and drop function.

8. The method according to claim 7, **characterized in that** after an allocation of areas (42 - 52') and cooking applications (70 - 80), the first overview field (38) displays to which further areas the selected cooking application (70 - 80) can be extended.

9. The method according to any of the preceding claims, **characterized in that** after a selection of a cooking application (70 - 80), the first overview field (38) displays at least one area (42 - 52') which is allocated in an optimized manner by an allocated controller (24) and which can be selected in order to place the selected cooking application (70 - 80) in this area or to extend it to this area.

10. The method according to any of the preceding claims, **characterized in that** from the first menu level a submenu can be called in which cooking applications (70 - 80) can be individualized or in which the predefined cooking chamber subdivisions, predefined cooking applications and predefined cooking chamber subdivisions with already allocated cooking applications, to be displayed in the first menu level in the second to fourth overview fields (54, 68, 82), respectively, can be selected and/or positioned.

11. The method according to any of the preceding claims, **characterized in that** additional, individually parameterizable select keys can be generated and saved permanently in a submenu for the second, third and/or fourth overview field (54, 68, 82), in particular wherein after the saving, the additional select keys are included in the second, third and/or fourth overview field (54, 68, 82) and are displayed independently in the first menu level.

12. The method according to any of the preceding claims, **characterized in that** in the first menu level and in the first overview field (38), either a plurality of cooking chambers having cooking chamber areas (42 - 52') that are selectable in the first menu level and activatable thereby are displayed next to each other, or cooking chambers can be selected individually in order to be displayed alone.

13. The method according to any of the preceding claims, **characterized in that** an information display area is available in the first menu level or can be unhidden in the first menu level by selecting it, the information display area containing information in relation to parameters for each area of the cooking chamber.

14. The method according to any of the preceding claims, **characterized in that** each area (42 - 52') in the first overview field (38) is selectable such that, optionally by interposition of a pop-over key (132) which is then unhidden, access to at least one of the following keys is effected, which are unhidden: stop key, timer key, delete key, key for opening a function to change the selected areas, and modifier key for opening a submenu.

15. The method according to any of the preceding claims, **characterized in that** each cooking chamber has a plurality of heating fields, and that areas can be selected in the first overview field (38) which are outside the limits between neighboring heating fields.

## Revendications

1. Procédé d'affichage d'au moins un menu de commande d'un appareil de cuisson (10) sur un écran tactile (26) et de pilotage d'un appareil de cuisson (10), le menu de commande présentant différents niveaux de menu, **caractérisé en ce que** sont simultanément affichés dans un premier niveau de menu :
a) un premier champ de vue d'ensemble (38) d'au moins un espace de cuisson formant une surface de chauffage plane et présentant des zones (42-52') aptes à être sélectionnées directement dans le premier niveau de menu pour une activation séparée, et, en outre, au moins l'un des champs de vue d'ensemble suivants
b) un deuxième champ de vue d'ensemble (54) comportant plusieurs subdivisions d'espace de cuisson (56-66) prédéfinies différentes qui présentent différentes zones (42-52') de l'espace de cuisson aptes à être activées séparément, les subdivisions d'espace de cuisson (56-66) prédéfinies étant aptes à être sélectionnées directement dans le premier niveau de menu pour une activation,
c) un troisième champ de vue d'ensemble (68) comportant plusieurs applications de cuisson (70-80) différentes qui sont aptes à être sélectionnées directement dans le premier niveau de menu pour une activation ; et
d) un quatrième champ de vue d'ensemble (82) comportant différentes subdivisions d'espace de cuisson prédéfinies qui présentent des applications de cuisson déjà attribuées qui sont aptes à être sélectionnées directement dans le premier niveau de menu.

2. Procédé selon la revendication 1, **caractérisé en ce que** dans le premier niveau de menu, le troisième champ de vue d'ensemble (68) est également affiché, et, sans quitter le premier niveau de menu, des zones (42-52') de l'espace de cuisson peuvent être sélectionnées et des applications de cuisson (56-66) peuvent être attribuées aux zones sélectionnées.

3. Procédé selon la revendication 1 ou 2, **caractérisé en ce que** dans le premier niveau de menu, en plus du premier champ de vue d'ensemble (38), seul le deuxième, le troisième ou le quatrième champ de vue d'ensemble (54, 68, 82) peut être affiché, et il est possible de sélectionner par l'intermédiaire de touches virtuelles supplémentaires, si le deuxième, le troisième ou le quatrième champ de vue d'ensemble (54, 68, 82) est le champ de vue d'ensemble supplémentaire affiché.

4. Procédé selon l'une des revendications précédentes, **caractérisé en ce qu'**après la sélection d'une option dans le deuxième, le troisième et/ou le quatrième champ de vue d'ensemble (54, 68, 82), les autres options de ces champs de vue d'ensemble sont masquées.

5. Procédé selon l'une des revendications précédentes, **caractérisé en ce que** l'utilisation d'un menu de commande est mémorisée dans une unité de commande (24) et **en ce que** lors d'une commande subséquente, soit au moins le champ de vue d'ensemble utilisé le plus rarement dans le groupe du deuxième, troisième et quatrième champ de vue d'ensemble (54, 68, 82) est masqué sur le premier niveau de menu, soit le champ de vue général (54, 68, 82) utilisé en dernier est visible et les autres champs de vue d'ensemble sont masqués.

6. Procédé selon la revendication 5, **caractérisé en ce qu'**une touche de rappel pour chaque champ de vue d'ensemble (54, 68, 82) masqué est présente dans le premier niveau de menu, le champ de vue d'ensemble attribué apparaissant de nouveau dans le premier plan de menu lors de la sélection d'une touche de rappel.

7. Procédé selon l'une des revendications précédentes, **caractérisé en ce que** des applications de cuisson (70-80) sont attribuées à des zones sélectionnées (42-52') de l'espace de cuisson, ou inversement des zones sélectionnées (42-52') de l'espace de cuisson sont attribuées à des applications de cuisson (70-80) par sélection des zones dans le premier champ de vue d'ensemble (38) et d'applications de cuisson (70-80) dans le troisième champ de vue d'ensemble (68), en particulier par appui ou une fonction glisser-déposer.

8. Procédé selon la revendication 7, **caractérisé en ce que** suite à l'attribution de zones (42-52') et d'applications de cuisson (70-80), le premier champ de vue d'ensemble (38) affiche sur quelles zones supplémentaires l'application de cuisson (70-80) peut être étendue.

9. Procédé selon l'une des revendications précédentes, **caractérisé en ce que** suite à une sélection d'une application de cuisson (70-80) dans le premier champ de vue d'ensemble (38), au moins une zone (42-52') est affichée qui est attribuée de manière optimisée par une unité de commande (24) attribuée et qui peut être sélectionnée pour placer l'application de cuisson (70-80) sélectionnée sur cette zone ou l'étendre sur cette zone.

10. Procédé selon l'une des revendications précédentes, **caractérisé en ce qu'**il est possible d'appeler un sous-menu du premier niveau de menu, dans lequel des applications de cuisson (70-80) peuvent être individualisées, ou dans lequel les subdivisions d'espace de cuisson prédéfinies, les applications de cuisson prédéfinies ou les subdivisions d'espace de cuisson prédéfinies avec des applications de cuisson déjà attribuées, destinées à être affichées dans le premier niveau de menu dans le deuxième au quatrième champ de vue d'ensemble (54, 68, 82), respectivement, peuvent être sélectionnées et/ou positionnées.

11. Procédé selon l'une des revendications précédentes, **caractérisé en ce que** des touches de sélection supplémentaires, aptes à être individuellement paramétrées, peuvent être générées et stockées de manière durable dans un sous-menu pour le deuxième, le troisième et/ou le quatrième champ de vue d'ensemble (54, 68, 82), les touches de sélection supplémentaires étant en particulier inclues dans le deuxième, le troisième et/ou le quatrième champ de vue d'ensemble (54, 68, 82) et affichées indépendamment dans le premier niveau de menu après le stockage.

12. Procédé selon l'une des revendications précédentes, **caractérisé en ce que** dans le premier niveau de menu et dans le premier champ de vue d'ensemble (38), soit plusieurs espaces de cuisson avec des zones (42-52') des espaces de cuisson qui sont aptes à être sélectionnées dans le premier niveau de menu et ainsi à être activées, sont affichés les uns à côté des autres, soit des espaces de cuisson peuvent être sélectionnés individuellement pour être affichés seuls.

13. Procédé selon l'une des revendications précédentes, **caractérisé en ce qu'**une zone d'affichage d'informations est présente dans le premier niveau de menu ou peut être visible dans le premier niveau de menu par sélection, des informations concernant des paramètres pour chaque zone de l'espace de cuisson étant contenues dans la zone d'affichage d'informations.

14. Procédé selon l'une des revendications précédentes, **caractérisé en ce que** chaque zone (42-52') dans le premier champ de vue d'ensemble (38) est apte à être sélectionnée de telle sorte que, optionnellement par interposition d'une touche pop-over (132) qui est alors visible, un accès à au moins l'une des touches suivantes qui deviennent visibles est réalisé : touche d'arrêt, touche de minuterie, touche d'effacement, touche d'ouverture d'une fonction pour modifier les zones sélectionnées, et touche de modification pour ouvrir un sous-menu.

15. Procédé selon l'une des revendications précédentes, **caractérisé en ce que** chaque espace de cuisson présente plusieurs champs de chauffage et **en ce que** des zones se trouvant à l'extérieur des limites entre des champs de chauffage adjacents peuvent être sélectionnées dans le premier champ de vue d'ensemble (38).
